# EUROPEAN PATENT APPLICATION

(11) **EP 2 615 530 A2**
(43) Date of publication of application: **17.07.2013**
(21) Application number: 13150792.3
(22) Date of filing: 10.01.2013
(51) Int. Cl.: G06F 3/041, G06F 3/044

(54) **Method, processing device and computer-readable recording medium for sensing touch on touch panel.**

(30) Priority: 12.01.2012 KR 20120003724
(71) Applicant: HiDeep Inc., Gyeonggi-do 463-400 (KR)
(72) Inventor: Sangsic, Yoon, 448-808 Gyeonggi-do (KR); Bonkee, Kim, 463-410 Gyeonggi-do (KR)
(74) Representative: Ferreccio, Rinaldo

(57) **Abstract**

Disclosed is a method for sensing touch on a touch panel including a plurality of drive lines and a plurality of sensing lines, wherein the drive lines and the sensing lines cross each other, the method including: applying parallelly sensing signals having mutually different frequencies to at least two out of a plurality of the drive lines; and separating only a signal having a specific frequency from signals outputted from the sensing line.

## Description

### BACKGROUND

### Field

The present invention relates to a method, a device and a computer-readable recording medium for sensing touch on a touch panel, and more particularly to a method, a device and a computer-readable recording medium which make it possible to obtain a sufficient observation time by using sensing signals having frequencies and phases, either or both of which are different from each other.

### Description of Related Art

In general, with the development of electronic communication technology, a variety of electronic devices are being provided. The electronic devices have a tendency to have manipulation easiness and a good design. In accordance with the trend, it is emphasized that an input device including a representative keyboard or keypad should be diversified.

The input device has been developed from a data processing by using the input device such as the keyboard or keypad to a touch panel functioning as both an input device and an output device. The touch panel has a concept which commonly designates an input device allowing a user to input data by using no separate input equipments. Regarding the touch panel, data is inputted by directly touching a display panel. The touch panel data input is performed in a simply way and has less malfunction.

In the mean time, with the recent development and popularization of a graphic user interface (GUI) system, a touch screen is now being generally used which allows a user to simply input. The touch screen is implemented by recognizing the location of a touch occurrence on a touch sensor panel and then by performing an action corresponding to the location.

The touch sensor panel may be formed in the form of a matrix comprised of row wirings and column wirings. A sensor or pixel is located at a point where the row wirings and column wirings cross each other. Each row wiring can be driven by a sensing signal. Because electric charges injected into the column wiring by the sensing signal is proportional to the amount of touching, the location of touch can be recognized. In general, after the same sensing signal is serially inputted to the row wirings respectively, the location of the touch is recognized by receiving the signal through each column wiring. However, for the purpose of discriminating the sensing signal inputted to each row wiring, each sensing signal must be serially inputted. Accordingly, an observation time allocated to each row wiring has no choice but to be limited and precision of the touch sensing is naturally reduced. Further, if there is noise having the same frequency as that of the sensing signal, the precision of the touch sensing has no choice but to be reduced more.

### SUMMARY

One embodiment is a method for sensing touch on a touch panel including a plurality of drive lines and a plurality of sensing lines, wherein the drive lines and the sensing lines cross each other. The method includes: applying parallelly sensing signals having mutually different frequencies to at least two out of a plurality of the drive lines; and separating only a signal having a specific frequency from signals outputted from the sensing lines.

Another embodiment is a method for sensing touch on a touch panel including a plurality of drive lines and a plurality of sensing lines, wherein the drive lines and the sensing lines cross each other. The method includes: applying parallelly sensing signals having the same frequency and mutually different phase delays to at least two out of a plurality of the drive lines; and separating only a signal having a specific frequency and a specific phase from signals outputted from the sensing lines.

A plurality of the drive lines are divided into two or more groups. The applying sensing signals may include: applying parallelly sensing signals having mutually different frequencies to the drive lines belonging to mutually different groups; and applying parallelly sensing signals having the same frequency and mutually different phase delays to the drive lines belonging to the same group.

A plurality of the drive lines are divided into two or more groups. The applying sensing signals may include: applying parallelly sensing signals having the frequencies and phase delays, either or both of which are mutually different from each other to the drive lines belonging to mutually different groups; and applying serially sensing signals having the same frequency and the same phase delay to the drive lines belonging to the same group.

It is recommended that the sensing signals having mutually different phase delays have an orthogonal relationship with each other.

Further another embodiment is a method for sensing touch on a touch panel including a plurality of drive lines and a plurality of sensing lines, wherein the drive lines and the sensing lines cross each other. The method includes: applying sensing signals through a combination of two or more signals having frequencies and phases, either or both of which are mutually different from each other to at least one out of a plurality of the drive lines; and separating at least one signal from signals outputted from the sensing lines.

The applying sensing signals may include inputting parallelly sensing signals obtained through a combination of two or more signals having frequencies and phases, either or both of which are mutually different from each other to at least two out of a plurality of the drive lines.

It is recommended that the signals having mutually different frequencies have an orthogonal relationship with each other.

Yet another embodiment is a device for sensing touch on a touch panel including a plurality of drive lines and a plurality of sensing lines, wherein the drive lines and the sensing lines cross each other. The device includes: a sensing signal generator which applies parallelly sensing signals having mutually different frequencies to at least two out of a plurality of the drive lines; and a touch determination unit which separates only a signal having a specific frequency from signals outputted from the sensing lines and determines the occurrence and location of the touch.

Still another embodiment is a device for sensing touch on a touch panel including a plurality of drive lines and a plurality of sensing lines, wherein the drive lines and the sensing lines cross each other. The device includes: a sensing signal generator which applies parallelly sensing signals having the same frequency and mutually different phase delays to at least two out of a plurality of the drive lines; and a touch determination unit which separates only a signal having a specific frequency and a specific phase from signals outputted from the sensing lines and determines the occurrence and location of the touch.

A plurality of the drive lines are divided into two or more groups. The sensing signal generator may apply parallelly sensing signals having mutually different frequencies to the drive lines belonging to mutually different groups, and may apply parallelly sensing signals having the same frequency and mutually different phase delays to the drive lines belonging to the same group.

A plurality of the drive lines are divided into two or more groups. The sensing signal generator may apply parallelly sensing signals having the frequencies and phase delays, either or both of which are mutually different from each other to the drive lines belonging to mutually different groups, and may apply serially sensing signals having the same frequency and the same phase delay to the drive lines belonging to the same group.

It is recommended that the sensing signals having mutually different phase delays have an orthogonal relationship with each other.

Still another embodiment is a device for sensing touch on a touch panel including a plurality of drive lines and a plurality of sensing lines, wherein the drive lines and the sensing lines cross each other. The device includes: a sensing signal generator which applies sensing signals through a combination of two or more signals having frequencies and phases, either or both of which are mutually different from each other to at least one out of a plurality of the drive lines; and a touch determination unit which separates at least one signal from signals outputted from the sensing lines and determines the occurrence and location of the touch.

The sensing signal generator may input parallelly sensing signals obtained through a combination of two or more signals having frequencies and phases, either or both of which are mutually different from each other to at least two out of a plurality of the drive lines.

It is recommended that the signals having mutually different frequencies have an orthogonal relationship with each other.

Meanwhile, still another embodiment is a method for sensing the occurrence and location of touch on a touch panel by using sensing signals having frequencies and phases, either or both of which are different from each other, and a computer-readable medium for recording a computer program for executing the method.

### BRIEF DESCRIPTION OF THE DRAWINGS

Arrangements and embodiments may be described in detail with reference to the following drawings in which like reference numerals refer to like elements and wherein:
Fig. 1 is a view for describing a general method for sensing touch on a touch panel;
Fig. 2 is a view for describing a method for sensing touch in accordance with a first embodiment of the present invention;
Fig. 3 is a view for describing a method for sensing touch in accordance with a second embodiment of the present invention;
Fig. 4 is a view for describing a method for sensing touch in accordance with a third embodiment of the present invention;
Fig. 5 is a view for describing a method for sensing touch in accordance with a fourth embodiment of the present invention; and
Figs. 6 and 7 are views for describing a method for sensing touch in accordance with a fifth embodiment of the present invention.

### DETAILED DESCRIPTION

The following detailed description of the present invention shows a specified embodiment of the present invention and will be provided with reference to the accompanying drawings. The embodiment will be described in enough detail that those skilled in the art are able to embody the present invention. It should be understood that various embodiments of the present invention are different from each other and need not be mutually exclusive. For example, a specific shape, structure and properties, which are described in this disclosure, may be implemented in other embodiments without departing from the spirit and scope of the present invention with respect to one embodiment. Also, it should be noted that positions or placements of individual components within each disclosed embodiment may be changed without departing from the spirit and scope of the present invention. Therefore, the following detailed description is not intended to be limited. If adequately described, the scope of the present invention is limited only by the appended claims of the present invention as well as all equivalents thereto. Similar reference numerals in the drawings designate the same or similar functions in many aspects.

Hereafter, exemplary embodiments of the present invention will be described in detail with reference to the accompanying drawings in order that the present invention may be easily implemented by those skilled in the art.

### [An embodiment of the present invention]

### A general method for sensing touch

Prior to the description of a touch sensing method according to an embodiment of the present invention, a general method for sensing touch on a touch screen will be described.

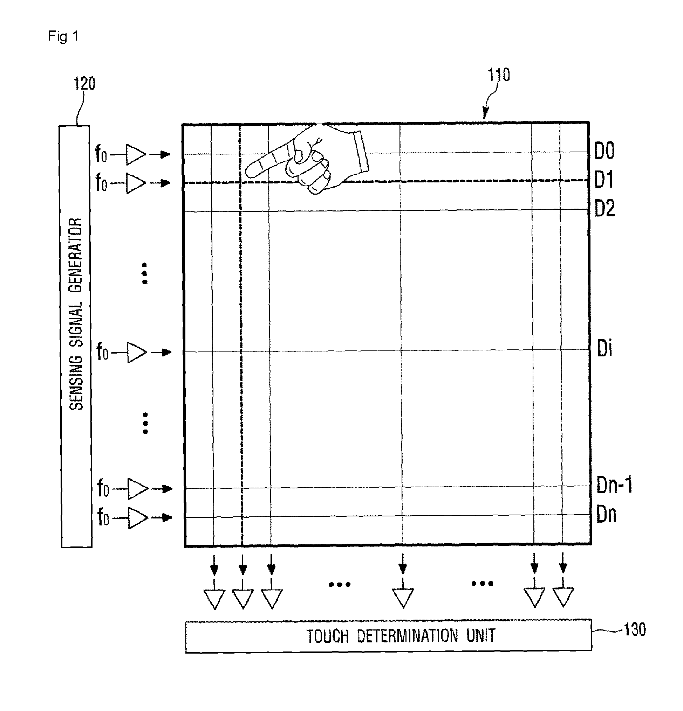

Fig. 1 is a view for describing the general method for sensing touch.

When a touch occurs on a touch sensor panel 110 by a touch means (e.g., skin or a stylus pen), a touch sensing device senses the location of the touch.

The touch sensor panel 110 is formed in the form of a matrix comprised of row wirings and column wirings. The row wiring and the column wiring are separated from each other by a dielectric material. A sensor or pixel is located at a point where the row wirings and column wirings cross each other. Each row wiring can be driven by a stimulation signal. Therefore, it can be said that the row wiring is a drive line. Also, a sensing signal outputted from the column wiring corresponding to a point where the touch has occurred by the stimulation signal injected into the row wiring becomes different from a signal outputted from another column wiring, so that the location of the touch can be recognized by the signal. Therefore, it can be said that the column wiring is a sensing line.

A signal with a particular frequency may be inputted through each drive line. The signal may be generated by a sensing signal generator 120. The sensing signal generator 120 inputs serially the sensing signal to each drive line. For example, on the basis of a clock signal, etc., the sensing signal generator 120 inputs the sensing signal to a first drive line D0 during a first interval and inputs the sensing signal to a second drive line D 1 during a second interval, so that the same sensing signal is controlled not to be parallelly inputted to the two or more sensing lines. This is because, when the same sensing signal is parallelly inputted to a plurality of the sensing lines, it is impossible to recognize which location of the drive line the touch has occurred in, even though the touch is sensed through a particular sensing line. Therefore, the sensing signals must be supplied to the drive lines at mutually different points of time.

When the touch occurs at a particular location of the touch screen, a sensing line passing through the particular location outputs a signal different from signals outputted from other sensing lines. A touch determination unit 130 receives a signal outputted from each sensing line and determines which location of the sensing line the touch has occurred on. A signal outputted from each sensing line may be observed parallelly or serially. When the signal outputted from each sensing line is parallelly observed, an observation time becomes relatively longer and accuracy of the touch sensing is increased. Since it is only required to determine only a sensing line outputting a signal different from a steady-state signal among the signals outputted from the sensing lines, it is more efficient to parallelly sense the signals from the sensing lines.

For example, a signal outputted from the sensing line passing through a point where the touch has occurred may have an amplitude lower than that of a steady-state signal outputted from another sensing line. The point where the touch has occurred can be recognized by determining the amplitude difference.

Hereafter, the method for sensing touch in accordance with various embodiments of the present invention will be described.

### First embodiment

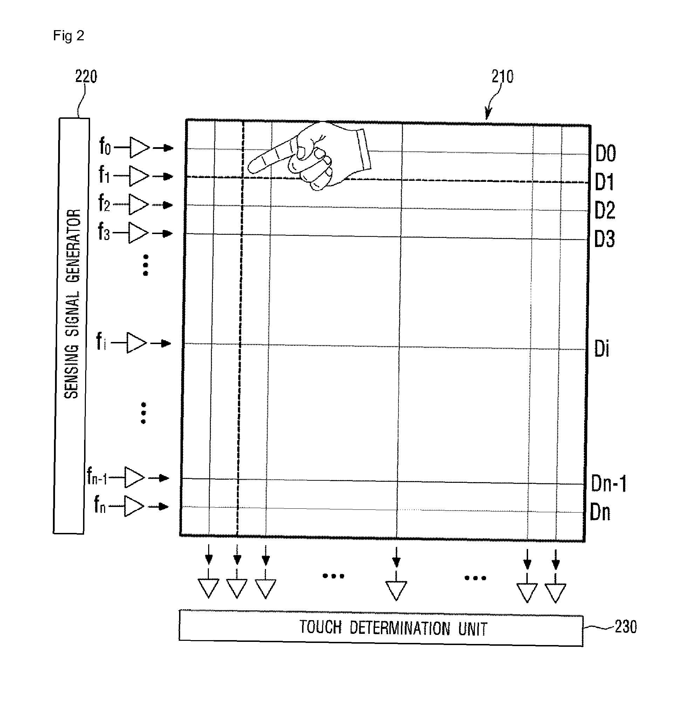

Fig. 2 is a view for describing a device and a method for sensing touch in accordance with a first embodiment of the present invention.

Referring to Fig. 2, the touch sensing device may include a touch sensor panel 210 comprised of a plurality of row wirings and a plurality of column wirings, a sensing signal generator 220 which inputs a sensing signal to the touch sensor panel 210, and a touch determination unit 230 which receives a signal outputted from the column wiring and determines which location of the sensing line the touch has occurred on.

As described above, it can be said that the row wiring and column wiring of the touch sensing panel 210 correspond to a drive line and a sensing line respectively. In the following description and accompanying drawings, while a touch sensing panel having an orthogonal array consisting of the row and column will be described as an example, the embodiment of the present invention is not limited to this. The embodiment of the present invention can be applied to another touch sensing panel having an array of arbitrary dimension, for example, a diagonal array, a concentric array, a 3-dimensional random array, etc., and an array obtained by the application of them.

The drive line and the sensing line may be formed of a transparent conductive material (e.g., Indium Tin Oxide (ITO), Antimony Tin Oxide (ATO) or the like). However, the drive line and the sensing line may be also formed of another transparent material or an opaque conductive material including copper and the like.

According to the first embodiment of the present invention, the sensing signal generated by the sensing signal generator 220 is inputted to the drive line of the touch sensor panel 210. The frequencies of the sensing signals which are inputted to the drive lines D0, D1, D2, ... , Dn respectively may be different from each other. That is, when a frequency of a signal inputted to the first drive line D0 is f0, a frequency of a signal inputted to the second drive line D1 may be f1 and a frequency of a signal inputted to an i^{th} drive line Di may be fi. The frequencies may be different from each other. Since the frequencies of the sensing signals inputted to the drive lines are mutually different, the signal outputted through the sensing line is caused to pass through a band pass filter having mutually different pass bands even though the signals are parallelly inputted to the drive lines respectively. Accordingly, it is possible to recognize which location of the drive line the touch has occurred in. For example, when sensing signals having frequencies of f0 and f1 respectively are parallelly inputted to the first and the second drive lines D0 and D1 respectively, a signal outputted from the sensing line has a form of a combination of the signals having the frequencies. Such signals are caused to pass through the band pass filter having a band of f0 and the band pass filter having a band of f1, so that the corresponding signal can be separated. If the signal which has passed through the band pass filter having a band of f0 is different from a steady-state signal, it can be determined that the touch has occurred at a corresponding location of the first drive line D0. If the signal which has passed through the band pass filter having a band of f1 is different from a steady-state signal, it can be determined that the touch has occurred at a corresponding location of the second drive line D1. Accordingly, when all of the sensing signals inputted to the drive lines are different from each other, the sensing signals can be parallelly inputted, and thus a time required for inputting the signal to one drive line, in other words, an observation time for each drive line is increased compared to a case where the signal is serially inputted. As a result, accuracy of the touch sensing can be increased.

It is recommended that the frequencies of the sensing signals inputted to the drive lines respectively have an orthogonal relationship with each other. Through use of the orthogonal frequencies are used, each signal can be easily separated from a signal obtained by summing all of the signals. For example, when a result obtained by multiplying the sum of a signal having the frequency of f0 and a signal having the frequency of f1 by f0 is integrated with respect to time, only the signal having the frequency of f0 can be extracted. The time may be an observation time. For instance, when the signal having the frequency of f0 and the signal having the frequency of f1 have an orthogonal relationship with each other, it is possible to make in a easy way a band pass filter through which only the signal having the frequency of f0 passes. A signal having a certain frequency and a signal having an n-times (n is a natural number) frequency of the certain frequency have an orthogonal relationship with each other. Therefore, for example, in case of the touch sensor panel 210 having n number of the drive lines, signals having frequencies of f0, 2f0, 3f0, ... , if0, ... , nf0 respectively may be respectively inputted to the drive lines. However, even though the signal having a certain frequency and the signal having an n-times (n is a natural number) frequency of the certain frequency do not have an orthogonal relationship with each other, when a signal through a combination is multiplied by a specific frequency (a frequency of one signal in the signal through a combination) and is integrated with respect to time, signals having mutually different frequencies may be separated by lengthening the observation time, i.e., the integration interval. That is, theoretically speaking, if the observation time becomes infinite, all of the signals having mutually different frequencies can be separated by the above-described method. Therefore, it is not necessary for the signals inputted to the drive lines to have an orthogonal relationship with each other.

The touch determination unit 230 receives the signal outputted through each sensing line. Also, the touch determination unit 230 separates the signals in accordance with the frequencies of the signals inputted through the drive lines. As described above, the signal through a combination is multiplied by the frequency of a signal to be separated and then is integrated with respect to time, so that the signals can be separated. The signal outputted through a plurality of the sensing lines may be inputted serially or parallelly. When the signal outputted through a plurality of the sensing lines is inputted parallelly, the observation time for one sensing line is increased, so that the touch sensing is efficiently performed. When the signal outputted through a plurality of the sensing lines is inputted serially, it is enough as long as the received signal is processed serially only by one hardware, so that a simple configuration can be designed.

### Second embodiment

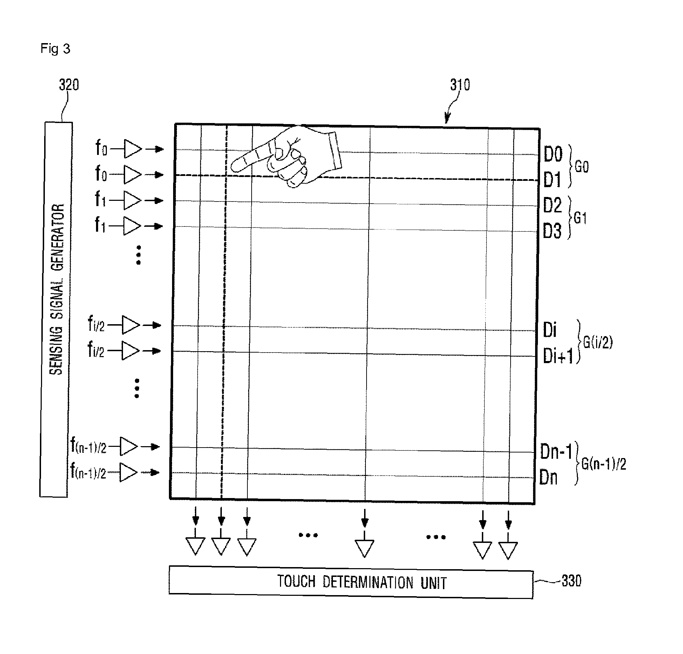

Fig. 3 is a view for describing a device and a method for sensing touch in accordance with a second embodiment of the present invention.

Referring to Fig. 3, the touch sensing device may include a touch sensor panel 310 comprised of a plurality of row wirings and a plurality of column wirings, a sensing signal generator 320 which inputs a sensing signal to the touch sensor panel 310, and a touch determination unit 330 which receives a signal outputted from the column wiring and determines which location of sensing line the touch has occurred on.

In the second embodiment of the present invention, the drive lines of the touch sensor panel 310 may be divided into a plurality of groups. Each group includes two or more drive lines. The sensing signals having the same frequency may be inputted to the drive lines belonging to the same group. For example, a sensing signal having the frequency of f0 may be inputted to the drive lines belonging to a first group G0. A sensing signal having the frequency of f1 may be inputted to the drive lines belonging to a second group G1.

Since the sensing signals having the same frequency are inputted to the drive lines belonging to the same group, the sensing signals must be serially inputted. For instance, when the first drive line D0 and the second drive line D1 belong to the same group, the sensing signal may be inputted to the first drive line D0 during a first time and the sensing signal may be inputted to the second drive line D1 during a second time which is not overlapped with the first time.

Meanwhile, since the sensing signals having mutually different frequencies are inputted to the drive lines belonging to mutually different groups, the sensing signals can be parallelly inputted. For example, when it is assumed that the first drive line D0 and the second drive line D1 belong to the first group G0 and a third drive line D2 and a fourth drive line D3 belong to the second group G1, the sensing signal may be inputted to the first drive line D0 and the third drive line D2 during the first time and the sensing signal may be inputted to the second drive line D1 and the fourth drive line D3 during the second time.

Though it is recommended that the sensing signals applied to the drive lines which belong to mutually different groups have an orthogonal relationship with each other for the same reason as that of the first embodiment, the signals are not necessarily limited to this.

The touch determination unit 330 receives the signal outputted through each sensing line. Also, the touch determination unit 330 separates the signals in accordance with the frequencies of the signals inputted through the drive lines. A method for separating the signals is the same as that described above. The signal outputted through a plurality of the sensing lines may be inputted serially or parallelly.

### Third embodiment

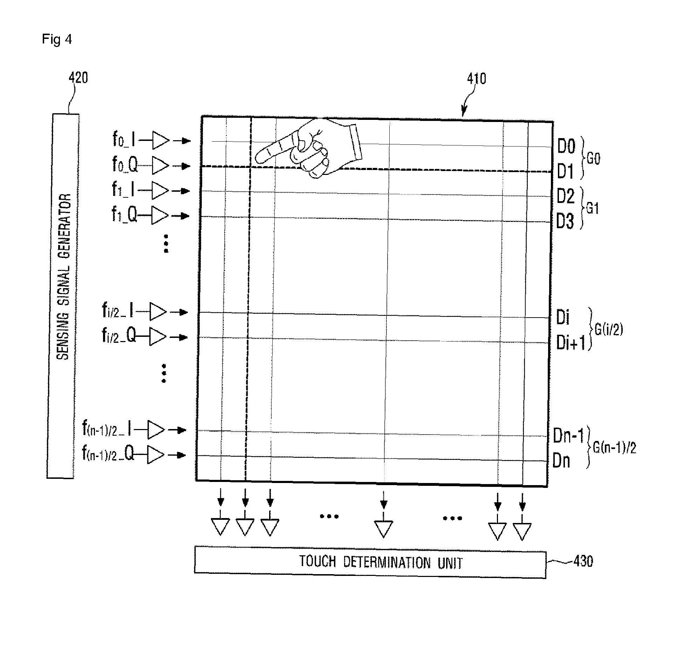

Fig. 4 is a view for describing a device and a method for sensing touch in accordance with a third embodiment of the present invention.

Referring to Fig. 4, the touch sensing device may include a touch sensor panel 410 comprised of a plurality of row wirings and a plurality of column wirings, a sensing signal generator 420 which inputs a sensing signal to the touch sensor panel 410, and a touch determination unit 430 which receives a signal outputted from the column wiring and determines which location of sensing line the touch has occurred on.

In the third embodiment of the present invention, the drive lines of the touch sensor panel 410 may be divided into a plurality of groups. The sensing signals having the same frequency and mutually different phases may be inputted to the drive lines belonging to the same group. For example, when it is assumed that the first drive line D0 and the second drive line D1 belong to the first group G0, the sensing signal having the frequency of f0 and a first phase delay may be inputted to the first drive line D0, and the sensing signal having the frequency of f0 and a second phase delay may be inputted to the second drive line D1.

As described above, so as to simultaneously input the sensing signals to the drive lines respectively, it is recommended that the frequencies of the sensing signals inputted have an orthogonal relationship with each other. In order that a plurality of the signals have the same frequency and an orthogonal relationship with each other, the signals must have a phase difference of 90×n degrees (n is an integer except 0 and multiples of 4). For example, a sensing signal having the frequency of f0 and a phase delay of 0 degree may be inputted to the first drive line D0, and a sensing signal having the frequency of f0 and a phase delay of 90 degree may be inputted to the second drive line D1. Also, when it is assumed that the first to the fourth drive lines belong to the first group, a sensing signal having the frequency of f0 and a phase delay of 0 degree may be inputted to the first drive line, a sensing signal having the frequency of f0 and a phase delay of 90 degree may be inputted to the second drive line, a sensing signal having the frequency of f0 and a phase delay of 180 degree may be inputted to the third drive line, and a sensing signal having the frequency of f0 and a phase delay of 270 degree may be inputted to the fourth drive line.

When the sensing signals have an n-times phase difference of 90 degree even though the sensing signals have the same frequency, it can be said that they have an orthogonal relationship with each other. Therefore, even if the sensing signals having the same frequency and the phase difference are inputted simultaneously to the mutually different drive lines, the signals can be distinguished. Even though a plurality of the signals having the same frequency have a phase difference other than the n-times phase difference of 90 degree, a possibility of the signal separation, as mentioned above, is increased with the extension of the observation time.

Unless the signals having the same frequency and the same phase are inputted to two or more drive lines, the sensing signal can be parallelly inputted to all of the drive lines. Accordingly, a time required for inputting the sensing signal to each drive line, in other words, an observation time is increased, so that precision of the touch sensing can be improved.

The touch determination unit 430 receives the signal outputted through each sensing line. Also, the touch determination unit 430 separates the signals in accordance with the frequencies of the signals inputted through the drive lines. A method for separating the signals is the same as that described above. The signal outputted through a plurality of the sensing lines may be inputted serially or parallelly. As described above, the parallel input of the signal is advantageous to the improvement of the observation time.

### Fourth embodiment

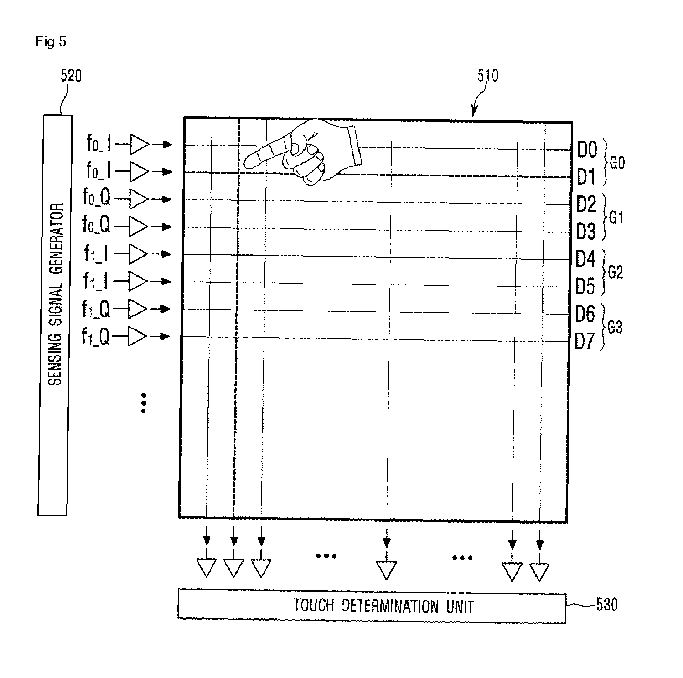

Fig. 5 is a view for describing a device and a method for sensing touch in accordance with a fourth embodiment of the present invention.

Referring to Fig. 5, the touch sensing device may include a touch sensor panel 510 comprised of a plurality of row wirings and a plurality of column wirings, a sensing signal generator 520 which inputs a sensing signal to the touch sensor panel 510, and a touch determination unit 530 which receives a signal outputted from the column wiring and determines which location of sensing line the touch has occurred on.

The fourth embodiment of the present invention may be performed through a combination of the second embodiment and the third embodiment of the present invention. That is, the drive lines of the touch sensor panel 510 may be divided into a plurality of groups. Sensing signals having the same frequency and mutually different phases may be inputted to at least two among a plurality of the groups. It is enough as long as each group includes at least one drive line. When each group includes two or more drive lines, a sensing signal having the same frequency and the same phase may be inputted to the drive lines belonging to the same group.

For instance, when it is assumed that the first drive line D0 and the second drive line D1 belong to the first group G0 and the third drive line D2 and the fourth drive line D3 belong to the second group G1, a sensing signal having the frequency of f0 and the first phase delay may be inputted to the first drive line D0 and the second drive line D1, and a sensing signal having the frequency of f0 and the second phase delay different from the first phase delay may be inputted to the third drive line D2 and the fourth drive line D3. Additionally, when it is assumed that a fifth drive line D4 and a sixth drive line D5 belong to a third group G2 and a seventh drive line D6 and an eighth drive line D7 belong to a fourth group G3, a sensing signal having the frequency of f1 and the first phase delay may be inputted to the fifth drive line D4 and the sixth drive line D5, and a sensing signal having the frequency of f1 and the second phase delay may be inputted to the seventh drive line D6 and an eighth drive line D7. The first phase delay and the second phase delay may be selected, as described above, among 0 degree and 90×n degrees. However, the first and the second phase delays are not limited to this.

When the sensing signals having the same frequency and the same phase delay are inputted to a plurality of the drive lines, the corresponding sensing signal must be serially inputted. In the aforementioned example, the sensing signal must be serially inputted to the first drive line D0 and the second drive line D1. In other words, the sensing signals cannot be inputted to the drive lines belonging to the same group.

The touch determination unit 530 receives the signal outputted through each sensing line. Also, the touch determination unit 530 separates the signals in accordance with the frequencies of the signals inputted through the drive lines. A method for separating the signals is the same as that described above. The signal outputted through a plurality of the sensing lines may be inputted serially or parallelly. As described above, the parallel input of the signal is advantageous to the improvement of the observation time.

### Fifth embodiment

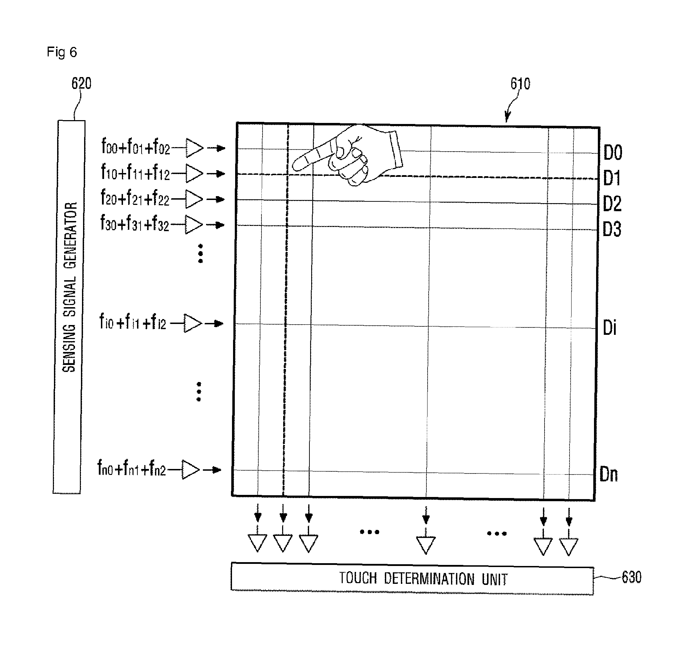

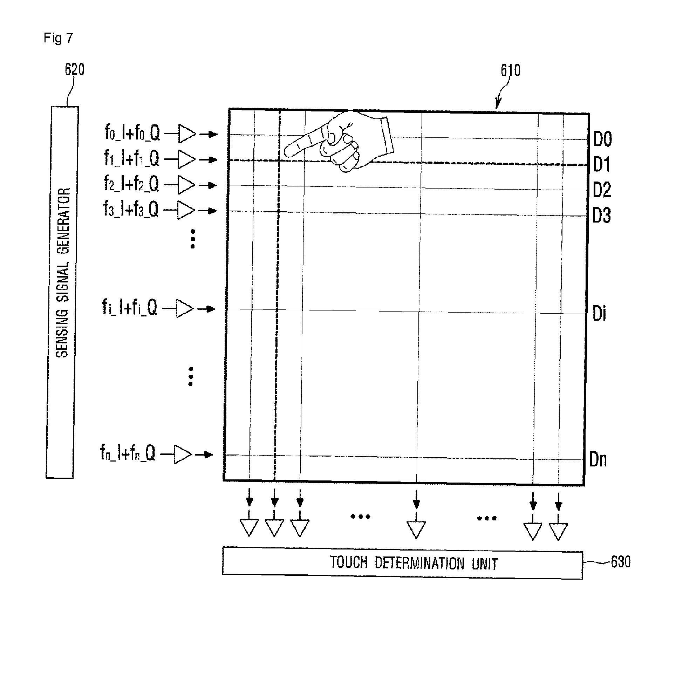

Figs. 6 and 7 are views for describing a method for sensing touch in accordance with a fifth embodiment of the present invention.

Referring to Figs, 6 and 7, the touch sensing device may include a touch sensor panel 610 comprised of a plurality of row wirings and a plurality of column wirings, a sensing signal generator 620 which inputs a sensing signal to the touch sensor panel 610, and a touch determination unit 630 which receives a signal outputted from the column wiring and determines which location of sensing line the touch has occurred on.

In the fifth embodiment of the present invention, a sensing signal through a combination of two or more signals having the frequencies and phases, either or both of which are mutually different from each other, is inputted to one drive line.

According to the embodiment, as shown in Fig. 6, a sensing signal through a combination of a plurality of the signals having mutually different frequencies may be inputted to one drive line.

For example, a sensing signal through a combination of three signals having the frequencies of f00, f01 and f02 respectively may be inputted to the first drive line D0. A sensing signal through a combination of three signals having the frequencies of f10, f11 and f12 may be inputted to the second drive line D1.

According to this, noise effect on the touch sensing becomes reduced. For instance, it is assumed that there exists noise having the frequency of f01. In this case, when only a signal having the frequency of f01 is inputted to the first drive line D0, the accuracy of the touch sensing is inevitably reduced by the noise. However, when a sensing signal through a combination of three signals having the frequencies of f00, f01 and f02 respectively is inputted to the first drive line D0, the sensing signals having the frequencies of f00 and f02 are detected except for only the sensing signal having the frequency of f01, so that the touch can be sensed with accuracy. The exception of the sensing signal having the frequency of f01 and the detection of the sensing signals having the frequencies of f00 and f02 may be performed by the touch determination unit 630. A method for separating only the signal having a specific frequency is the same as that described above.

In general, when noise having a specific frequency occurs at the time of sensing the touch, a frequency hopping method which replaces a sensing signal having a frequency corresponding to the specific frequency with a signal having a frequency different from the corresponding frequency has been employed. However, according to the fifth embodiment of the present invention, the corresponding noise can be easily removed with no help of the frequency hopping method only by recognizing the frequency of the noise.

Meanwhile, according to another embodiment, as shown in Fig. 7, a sensing signal through a combination of signals having the same frequency and mutually different phases may be inputted to one drive line.

For example, a sensing signal through a combination of two signals having the frequency of f00 and mutually different phases, that is, two signals of f0_I and f0_Q may be inputted to the first drive line D0. A sensing signal through a combination of signals of f1_I and f1_Q may be inputted to the second drive line D1. As described above, while it is recommended that the combined signals have an orthogonal relationship with each other, the combined signals are not limited to this.

Moreover, an embodiment can be implemented through a combination of the embodiments shown in Figs. 6 and 7. That is, a sensing signal through a combination of the signals having mutually different frequencies and mutually different phases may be inputted to one drive line.

For example, a sensing signal through a combination of three signals of f00_I, f00_Q and f01_I may be inputted to the first drive line D0. A sensing signal through a combination of three signals of f10_I, f10_Q and f11_I may be inputted to the second drive line D1.

Further, for another example, a sensing signal through a combination of signals of f00_I, f00_Q, f01_I, f01_Q, ... may be inputted to the first drive line D0. A sensing signal through a combination of signals of f10_I, f10_Q, f11_I, f11_Q, ... may be inputted to the second drive line D1. In other words, a sensing signal through a combination of various signals having mutually different frequencies and mutually different phases may be inputted to one drive line.

When a sensing signal through a combination of signals having the same frequency and mutually different phases is inputted to one drive line, the number of the frequencies to be used is reduced, which is helpful to simplify hardware.

The touch determination unit 630 receives the signal outputted through each sensing line. Also, the touch determination unit 630 separates the signals in accordance with the frequencies of the signals inputted through the drive lines. If there is noise, the accuracy of the touch sensing is improved by excluding a signal having the frequency of the corresponding noise.

The features, structures and effects and the like described in the embodiments are included in at least one embodiment of the present invention and are not necessarily limited to one embodiment. Furthermore, the features, structures, effects and the like provided in each embodiment can be combined or modified in other embodiments by those skilled in the art to which the embodiments belong. Therefore, contents related to the combination and modification should be construed to be included in the scope of the present invention.

Although embodiments of the present invention were described above, these are just examples and do not limit the present invention. Further, the present invention may be changed and modified in various ways, without departing from the essential features of the present invention, by those skilled in the art. For example, the components described in detail in the embodiments of the present invention may be modified. Further, differences due to the modification and application should be construed as being included in the scope and spirit of the present invention, which is described in the accompanying claims.

## Claims

1. A method for sensing touch on a touch panel comprising a plurality of drive lines and a plurality of sensing lines, wherein the drive lines and the sensing lines cross each other, the method comprising:
applying parallelly sensing signals having mutually different frequencies to at least two out of a plurality of the drive lines; and
separating only a signal having a specific frequency from signals outputted from the sensing lines.

2. The method of claim 1, wherein a plurality of the drive lines are divided into two or more groups, and wherein the applying sensing signals comprises applying serially sensing signals having the same frequency to the drive lines belonging to the same group.

3. A method for sensing touch on a touch panel comprising a plurality of drive lines and a plurality of sensing lines, wherein the drive lines and the sensing lines cross each other, the method comprising:
applying parallelly sensing signals having the same frequency and mutually different phase delays to at least two out of a plurality of the drive lines; and
separating only a signal having a specific frequency and a specific phase from signals outputted from the sensing lines.

4. The method of claim 3, wherein a plurality of the drive lines are divided into two or more groups, and wherein the applying sensing signals comprises:
applying parallelly sensing signals having mutually different frequencies to the drive lines belonging to mutually different groups; and
applying parallelly sensing signals having the same frequency and mutually different phase delays to the drive lines belonging to the same group.

5. The method of claim 3, wherein a plurality of the drive lines are divided into two or more groups, and wherein the applying sensing signals comprises:
applying parallelly sensing signals having the frequencies and phase delays, either or both of which are mutually different from each other to the drive lines belonging to mutually different groups; and
applying serially sensing signals having the same frequency and the same phase delay to the drive lines belonging to the same group.

6. The method of claim 3, wherein the sensing signals having mutually different phase delays have an orthogonal relationship with each other.

7. A method for sensing touch on a touch panel comprising a plurality of drive lines and a plurality of sensing lines, wherein the drive lines and the sensing lines cross each other, the method comprising:
applying sensing signals through a combination of two or more signals having frequencies and phases, either or both of which are mutually different from each other to at least one out of a plurality of the drive lines; and
separating at least one signal from signals outputted from the sensing lines.

8. The method of claim 7, wherein the applying sensing signals comprises inputting parallelly sensing signals obtained through a combination of two or more signals having frequencies and phases, either or both of which are mutually different from each other to at least two out of a plurality of the drive lines.

9. A device for sensing touch on a touch panel comprising a plurality of drive lines and a plurality of sensing lines, wherein the drive lines and the sensing lines cross each other, the device comprising:
a sensing signal generator which applies parallelly sensing signals having mutually different frequencies to at least two out of a plurality of the drive lines; and
a touch determination unit which separates only a signal having a specific frequency from signals outputted from the sensing lines and determines the occurrence and location of the touch.

10. The device of claim 9, wherein a plurality of the drive lines are divided into two or more groups, and wherein the sensing signal generator applies serially sensing signals having the same frequency to the drive lines belonging to the same group.

11. A device for sensing touch on a touch panel comprising a plurality of drive lines and a plurality of sensing lines, wherein the drive lines and the sensing lines cross each other, the device comprising:
a sensing signal generator which applies parallelly sensing signals having the same frequency and mutually different phase delays to at least two out of a plurality of the drive lines; and
a touch determination unit which separates only a signal having a specific frequency and a specific phase from signals outputted from the sensing lines and determines the occurrence and location of the touch.

12. The device of claim 11, wherein a plurality of the drive lines are divided into two or more groups, and wherein the sensing signal generator applies parallelly sensing signals having mutually different frequencies to the drive lines belonging to mutually different groups, and applies parallelly sensing signals having the same frequency and mutually different phase delays to the drive lines belonging to the same group.

13. The device of claim 11, wherein a plurality of the drive lines are divided into two or more groups, and wherein the sensing signal generator applies parallelly sensing signals having the frequencies and phase delays, either or both of which are mutually different from each other to the drive lines belonging to mutually different groups, and applies serially sensing signals having the same frequency and the same phase delay to the drive lines belonging to the same group.

14. The device of claim 11, wherein the sensing signals having mutually different phase delays have an orthogonal relationship with each other.

15. A device for sensing touch on a touch panel comprising a plurality of drive lines and a plurality of sensing lines, wherein the drive lines and the sensing lines cross each other, the device comprising:
a sensing signal generator which applies sensing signals through a combination of two or more signals having frequencies and phases, either or both of which are mutually different from each other to at least one out of a plurality of the drive lines; and
a touch determination unit which separates at least one signal from signals outputted from the sensing lines and determines the occurrence and location of the touch.

16. The device of claim 15, wherein the sensing signal generator inputs parallelly sensing signals obtained through a combination of two or more signals having frequencies and phases, either or both of which are mutually different from each other to at least two out of a plurality of the drive lines.
